# EUROPÄISCHE PATENTSCHRIFT

(11) **EP 0 978 395 B1**
(45) Veröffentlichungstag und Bekanntmachung des Hinweises auf die Patenterteilung: **26.05.2004**
(21) Anmeldenummer: 99114985.7
(22) Anmeldetag: 31.07.1999
(51) Int. Cl.: B60C 1/00, B60C 9/18, C08L 21/00

(54) **Fahrzeugluftreifen**
Vehicle tyre
Bandage pneumatique pour véhicule

(30) Priorität: 04.08.1998 DE 19835169
(43) Veröffentlichungstag der Anmeldung: 09.02.2000
(73) Patentinhaber: Continental Aktiengesellschaft, 30165 Hannover (DE)
(72) Erfinder: du Bois, Andre, Dr., 30657 Hannover (DE); Neumann, Axel, Dr., 31559 Hohnhorst (DE); Blümel, Victor, Dr., 30459 Hannover (DE)

(56) Entgegenhaltungen:
- EP-A- 0 775 725
- EP-A- 0 900 826
- DE-A- 19 643 035
- US-A- 4 572 263
- US-A- 4 767 809

## Beschreibung

Die Erfindung betrifft einen Fahrzeugluftreifen mit zumindest einer luftundurchlässigen Innenschicht, einer Festigkeitsträger enthaltenden gummierten Karkasse, die vom Zenitbereich des Fahrzeugluftreifens bis in die Wulstbereiche reicht, einem radial außen befindlichen Gummilaufstreifen, zumindest einer zwischen Laufstreifen und Karkasse befindlichen Gürtellage, die gummierte Festigkeitsträger enthält, gegebenenfalls einem oder mehreren radial oberhalb und/oder unterhalb und/oder axial neben zumindest einer Gürtellage befindlichen Streifen aus Gummi, insbesondere Randstreifen, der sich zumindest in einem axial äußeren Randbereich der Gürtellage erstreckt, und weiteren üblichen Bestandteilen wie Wulstkerne, Bandage, Seitenwände, wobei die Gummierung der Festigkeitsträger zumindest einer Gürtellage und/oder der Gummi zumindest eines Streifens aus einer Gürtelkautschukmischung hergestellt ist, die als Kautschukkomponente Naturkautschuk und/oder synthetisches Polyisopren und/oder Polybutadien und/oder Styren-Butadien-Copolymer sowie weiterhin übliche Zusatzstoffe enthält.

Ein Fahrzeugluftreifen mit herkömmlicher Bauweise weist einen radial oberhalb der Karkasse und radial unterhalb des Laufstreifens befindlichen Gürtel auf, der die Stabilität des Luftreifens wesentlich erhöht Dieser Gürtel besteht aus textilen und/oder metallischen Festigkeitsträgern, die nach entsprechender Vorbehandlung in eine Kautschukmischung eingebettet werden, wobei eine Schicht an gummierten Festigkeitsträgem eine Gürtellage bildet. Üblicherweise werden für PKW-Reifen zwei und für LKW-Reifen zumindest drei solcher Gürtellagen auf den Teilreifenrohling nach dem Aufbringen von üblichen Lagen (Innenschicht, Wulstkeme, gegebenenfalls Seitenwänden, Karkaßeinlage) sowie gegebenenfalls nach einem Bombiervorgang (bei der Herstellung von Radialreifen) im allgemeinen einzeln aufgelegt. Anschließend kann eventuell eine Bandage aufgebracht werden. Danach werden Laufstreifen und je nach Bauart gegebenenfalls Seitenwände auf den bombierten Rohling aufgebracht und dieser vulkanisiert. Aus dem Reifenaufbau geht hervor, daß die axialen Enden der Gürtellagen zumindest in direktem Kontakt zu zwei weiteren Gummimischungen stehen. Diese Kontaktstelle ist besonders kritisch, da bedingt durch die unterschiedlichen Materialien (z. B. Festigkeitsträger der Gürtellage, Gummierung der Gürtellage, Seitenwandgummimischung) Spannungen auftreten, die wiederum zu einen erhöhten Wärmeaufbau führen, was letztendlich eine Zerstörung des Reifens hervorrufen kann. Insbesondere bei der Verwendung von metallischen Festigkeitsträgern im Gürtel traten diese Effekte aufgrund der großen Modulunterschiede besonders stark auf.

Um diesem Phänomen entgegenzuwirken, werden bei Verwendung mehrere Gürtellagen diese so aufgelegt, daß deren axiale Enden vorzugsweise versetzt zueinander liegen und ein zusätzlicher Randstreifen (Kantenstreifen) mit einer Breite von z. B. ca. 0,8 - 5,0 cm und einer Dicke von 0,5 - 5 mm über den gesamten Umfang des Reifens im Bereich der axialen Enden der Gürtellagen zwischen den einzelnen Gürtellagen gelegt wird bzw. dieser zusätzliche Randstreifen die axialen Enden der Gürtellagen umschlingt. Damit werden die Enden räumlich voneinander weiter entfernt, sodaß während des Gebrauchs des Reifens diese nicht aufeinander reiben können. Außerdem werden die in diesem Bereich auftretenden Spannungen durch einen derartigen Gürtelrandstreifen vermindert.

Auch ist bekannt radial unterhalb der ersten (untersten) Gürtellage einen Randstreifen (Schulterpolster) aus Gummi im Bereich des axialen Endes dieser Gürtellage anzuordnen und dieser gegebenenfalls auch die axialen Enden der Gürtellagen umschlingen kann, um auftretende Spannungen in diesem Bereich ebenfalls zu minimieren. Nichtsdestotrotz grenzen sowohl die Gürtelgummierung als auch die Randstreifen an andere Gummimischungen an. Da aber jede einzelne Gummimischung (z. B. der Bandage, der Seitenwand, des Laufstreifens, der Karkasse) andere Aufgaben erfüllen muß, variiert auch die Zusammensetzung dieser Mischungen. Dadurch entstehen Probleme an diesen Kontaktstellen, wodurch die Gürtelkantenhaltbarkeit, wie bereits erwähnt, negativ beeinflußt wird. So wird bisher in der Regel die Gürtelkautschukmischung (Gummierung der Festigkeitsträger des Gürtels und/oder die Mischung der Randstreifen) so eingestellt, daß sie eine hohe Weiterreißfestigkeit und eine hohe Ermüdungsbeständigkeit aufweist. Allerdings besitzen solche Mischungen den Nachteil, daß sie einen hohen Wärmeaufbau aufweisen und außerdem sehr teuer sind.

In der gattungsgemäßen US 4,572,263 sind beispielsweise Gürtelkautschukmischungen beschrieben, die eine gute Ermüdungsbeständigkeit aufweisen. Die Mischungen können 0,1 bis 5 phr Alterungsschutzmittel enthalten. In der nicht vorveröffentlichten EP-A- 0 900 826 (Dokument nach A. 54(3) EPÜ sind Festigkeitsträgergummierungen beschrieben, die 2,75 phr Alterungsschutzmittel enthalten.

Weiterhin wurde versucht, die mechanischen Belastungen an den Gürtelkanten durch konstruktive Maßnahmen zu reduzieren, was aber einerseits zu einer unerwünschten Erhöhung des Reifengewichtes führt und andererseits ebenfalls mit hohen Kosten verbunden ist.

Die Aufgabe der hier vorliegenden Erfindung besteht darin, die Haltbarkeit eines Fahrzeugluftreifens zu erhöhen, indem die Bereiche der Gürtelkanten so präpariert werden, daß die Neigung der Kantentrennung wesentlich vermindert werden kann.

Gelöst wird diese Aufgabe erfindungsgemäß dadurch, daß die Gummierung der Festigkeitsträger der Gürtellage und/oder der Gummi des Randstreifens aus einer Gürtelkautschukmischung hergestellt worden ist, in der der Anteil des Zusatzstoffes Alterungsschutzmittel in der Kautschukmischung bezogen auf 100 Gewichtsteile der gesamten Kautschukkomponenten zwischen 10 und 20 phr beträgt.

Überraschenderweise konnte festgestellt werden, daß durch diesen unüblich hohen Anteil an Alterungsschutzmittel in der Gürtelkautschukmischung (d. h. anmeldungsgemäß in der Gürtelgummierung (zumindest im axial äußeren Rand(Kanten)bereich) und/oder einem neben zumindest einer Gürtellage befindlichen Randstreifen aus Gummi, wobei sich dieser Randstreifen zumindest in einem axial äußeren Randbereich der Gürtellage vorhanden ist) die Haltbarkeit der Gürtelkanten verbessert werden konnte. Dieser Effekt war nicht zu erwarten, da durch einen hohen Anteil an Alterungsschutzmittel Ausblühungen dieses Stoffes befürchtet wurden. Diese wiederum würden Blasen verursachen, die eine Verschlechterung der Gürtelkantenhaltbarkeit erwarten ließen. Auch wurden Kalandrierprobleme bei höheren Konzentrationen an Alterungsschutzmittel angenommen, die aber überraschenderweise nicht auftreten.

Erfindungsgemäß kann die Gürtelgummierung aus einer Kautschukmischung mit der angegebenen Zusammensetzung bestehen. Die Gürtelgummierung steht im Randbereich, z. B. mit der Bandagengummierung und/oder der Seitenwandmischung, der Karkaßgummierung und der Laufstreifenmischung in Kontakt. In dieser Zone ist die Gürtelgummierung in der Lage, die Versorgung an Alterungsschutzmittel (die übrigen angrenzenden Gummimischungen enthalten in der Regel weniger (0 bis 5 phr) Alterungsschutzmittel) zu übernehmen, wodurch dieser Bereich besonders ermüdungsresistent und weiterreißbeständig wird. Eine andere Möglichkeit die Kontaktzone mit Alterungsschutzmittel zu versorgen besteht in der Verwendung eines Randstreifens, der sich zumindest in einem axial äußeren Randbereich der Gürtellage erstreckt. Der Randstreifen, der je nach nach Bauart und Reifengröße übliche Maße, wie z. B. eine Breite von ca. 0,8 bis 5,0 cm und eine Dicke von ca. 0,5 bis 5 mm aufweist, wird in Umfangsrichtung z. B. vor (Schulterpolsterstreifen) und/oder nach der ersten Gürtellage auf den Rohling aufgebracht. Es ist aber auch möglich, daß der Randstreifen während des Gummierungsvorganges der Festigkeitsträger gleich mitaufgebracht wird, sodaß ein einzelnes Auflegen des Randstreifens entfällt. Der Randstreifen kann sich mit seiner gesamten Breite auf der ersten Gürtellage befinden. Es ist aber auch möglich, daß ein Teil seiner Breite über die erste Gürtellagenkante hinausragt. Vorzugsweise soll sich die Kante der zweiten Gürtellage nach deren Auflegen auf dem Randstreifen befinden. Werden noch mehr Gürtellagen aufgebracht, ist es möglich, daß noch weitere Streifen zwischen diesen angeordnet werden. Auch ist es denkbar, über der letzten Gürtellage einen Randstreifen aufzulegen. Dieser gewährleistet die Bereitstellung von Alterungsschutzmittel z. B. in der Kontaktzone Laufstreifenmischung / Seitenwandmischung / Gürtelgummierung.

Es ist aber auch möglich, wie bereits erwähnt, den Randstreifen in der Art anzuordnen, daß das axiale Ende zumindest einer Gürtellage nahezu vollständig, d. h. radial ober- und unterhalb und seitlich von diesem umschlungen (eingehüllt) ist. Das hat den Vorteil, das durch die Anordnung nur eines Randstreifens, der die erfindungsgemäße Zusammensetzung aufweist, der entsprechende Gürtelkantenbereich umfassend mit Alterungsschutzmittel versorgt wird.

Die verwendete Kautschukmischung enthält erfindungsgemäß 10 bis 20 phr Alterungsschutzmittel. Beim Einsatz von wurden die besten Ergebnisse hinsichtlich dynamischer Beständigkeit der Gürtelkanten erreicht. Als Alterungsschutzmittel kommen bevorzugt verfärbende zur Anwendung, da diese besonders wirksam sind. Als vorteilhaft haben sich Phenylendiamine (z. B. IPPD - N-Isopropyl N'-phenyl-p-phenylendiamin) und Chinoline (z. B: TMQ - 2,2,4-Trimethyl-1,2-dihydrochinolin (polymerisiert)) erwiesen.

Die Kautschukmischung enthält weiterhin als Kautschukkomponenten Naturkautschuk und/oder synthetisches Polyisopren und/oder Polybutadien und/oder Styren-Butadien-Copolymer. Diese Polymere sind für die Herstellung von Kautschukmischungen dem Fachmann bekannt.

Ferner enthält die erfindungsgemäße Kautschukmischung übliche weitere Zusatzstoffe wie Verarbeitungshilfsmittel und Füllstoffe. Als Füllstoffe werden z. B. Ruß und/oder Kieselsäure verwendet. Zur Vulkanisation werden Schwefel bzw. Schwefelspender eingesetzt und außerdem werden vulkanisationsbeeinflussende Stoffe wie Beschleuniger oder Aktivatoren verwendet. Weiterhin werden der Kautschukmischung gegebenfalls Haftvermittler wie z. B. Resorcin, Resorcin-Formaldehydvorkondensat, HMMM (Hexamethoxymethylmelamin) und/oder Cobaltstearat beigemengt.

Anhand eines Ausführungsbeispiels soll die Erfindung näher erläutert werden. In der Tabelle 1 ist eine Zusammensetzung der erfindungsgemäße Kautschukmischung für Randstreifen angegeben worden.

**Tabelle 1**

| | ***Mischung*** ***[phr]*** | ***Mischungen*** ***[phr]*** | | |
|---|---|---|---|---|
| **Bestandteil** | **1** | **2 (gemäß Erf.)** | **3** | **4 (gemäß Erf.)** |
| Naturkautschuk | 100 | 100 | 100 | 100 |
| Ruß N326 | 55 | 55 | 55 | 55 |
| IPPD | 1 | 1 | 5 | 10 |
| TMQ | 1 | 10 | 1 | 1 |
| Co-Stearat | 2 | 2 | 2 | 2 |
| Resorcin | 2,5 | 2,5 | 2,5 | 2,5 |
| HMMM | 1,5 | 1,5 | 1,5 | 1,5 |
| Schwefel | 5 | 5 | 5 | 5 |
| Beschleuniger (DCBS)* | 1,2 | 1,2 | 1,2 | 1,2 |

| | | | | |
|---|---|---|---|---|
| * Benzothiazyl-2-dicyclohexylsulfenamid | | | | |

Diese Kautschukmischung wurde nach der Vulkanisation unter üblichen Bedingungen einer MFTF-Messung (Monsanto Fatigue to Failure-Methode) (101 % Dehnung) unterzogen. Weiterhin wurde die Shore A - Härte (nach DIN 53505) und der Spannungswert (nach DIN 53504) bestimmt (Tabelle 2).

**Tabelle 2**

| | ***Mischung*** | ***Mischungen*** | | |
|---|---|---|---|---|
| **Eigenschaft** | **1** | **2 (gemäß Erf.)** | **3** | **4 (gemäß Erf.)** |
| MFTF-Messung* [Zyklen] | 28000 | 54000 | 50000 | 59000 |
| Shore A | 73 | 75 | 74 | 71 |
| Modul 200 % [MPa] | 12,5 | 9,4 | 11,3 | 9,8 |

| | | | | |
|---|---|---|---|---|
| *MFTF-Messung - Ermüdungstest | | | | |

- Prüfkörper:: hantelförmiger Gummistab mit Wulst (Maße: 230mm x 76mm x 1,5mm), mit Stanzmesser 90 ° in Kalander- oder Walzrichtung ausgestanzt
- Gerät:: Monsanto Fatigue to Failure Tester; Frequenz: (104 ± 8) min⁻¹
- Prüftemperatur:: 23 bzw. 60 °C
- Durchführung:: Nach Ausrüstung des Gerätes mit entsprechenden Dehnungsnocken, die die verlangte Dehnung bewirken, werden die Probekörper so eingesetzt, daß diese unbelastet und gerade sitzen. Die Probenkörper werden nun solange einem ständig wiederholten Dehnungszyklus unterworfen, bis bei n=12 Probekörper mindestens 7 und bei n=24 Probekörper mindestens 13 gerissen sind. Die Dehnungszykten bis zum Bruch jeder Probe werden registriert.

Die Verringerung zumindest des Spannungswertes der erfindungsgemäßen Zusammensetzungen 2 und 4 (Tabelle 2) würde vermuten lassen, daß solche Mischungen z. B. als Randstreifen verwendet, nicht geeignet sind, einer Gürtelkantentrennung entgegenzuwirken. Es hat sich aber überraschender Weise gezeigt, wenn diese Mischungen z. B. als Randstreifen zwischen der ersten und der zweiten Gürtellage eines PKW-Reifens (Reifen 205/60 R15) eingesetzt werden, die Zerstörung bzw. Schädigung des Gürtelkantenbereich wesentlich verringert werden konnte (Tabelle 3).

**Tabelle 3**

| | ***Mischung*** | ***Mischungen*** | | |
|---|---|---|---|---|
| | **1** | **2 (gemäß Erf.)** | **3** | **4 (gemäß Erf.)** |
| **Reifen** | **100 %** | **115 %** | **108 %** | **120 %** |

Die Werte 2 bis 4 sind auf einen herkömmlichen Reifen (Reifen 205/60 R15) bezogen, der einen Randstreifen (zwischen zwei Gürtellagen) mit einer Mischung 1 aus dem Stand der Technik aufweist. Werte > 100 stellen Verbesserungen (weniger Zerstörung/Schädigungen) dar. Die Prüfung erfolgte nach in der Reifenindustrie üblichen Tests zur Ermittlung der allgemeinen Dauerhaltbarkeit in der Gürtelzone.

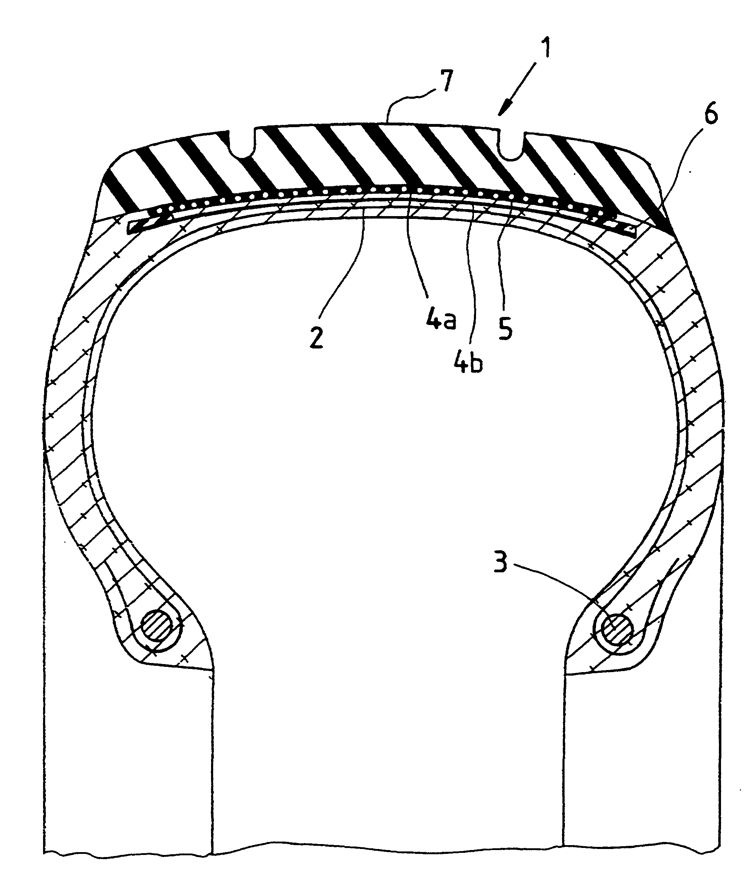

Anhand der Figur (schematischer Querschnitt eines Teilreifens) wird die Lage eines Randstreifens in einem Fahrzeuglufreifen deutlich.

In der Figur ist ein Fahrzeugluftreifen 1 mit einer Karkasse 2, die um die Wulstkerne 3 geschlagen ist und einem radial oberhalb der Karkasse 2 angeordneten Gürtel mit den Gürtellagen 4a und 4b, die Festigkeitsträger 5 aus Stahl enthalten, dargestellt. Zwischen den Gürtellagen 4a und 4b ist in deren axialen Randbereich ein Randstreifen 6 angeordnet, der sich mit seiner gesamten Breite (ca. 17 mm) auf der ersten (unteren) Gürtellage 4b befindet und über diese nicht hinausragt (nahezu bündiger Abschluß). Die zweite (obere) Gürtellage 4a ist so aufgelegt, daß sich deren axiale Enden ca. 9 mm auf dem radial unterhalb befindlichen Randstreifen 6 erstrecken. Die angegebenen mm - Werte sind auf einen Reifen 205/60 R15 bezogen, wobei diese je nach Bauart und Reifengröße unterschiedlich sein können. Der Randstreifen 6 weist z. B. die Zusammensetzung 4 der Tabelle 1 auf. Über dem Gürtel befindet sich der Laufstreifen 7. Des weiteren weist der Fahrzeugluftreifen weitere nicht näher dargestellte übliche Bestandteile wie z. B. Bandage, Seitenwände, Kemreiter auf.

## Patentansprüche

1. Fahrzeugluftreifen (1) mit zumindest
- einer luftundurchlässigen Innenschicht,
- einer Festigkeitsträger enthaltenden gummierten Karkasse (2), die vom Zenitbereich des Fahrzeugluftreifens bis in die Wulstbereiche reicht,
- einem radial außen befindlichen Gummilaufstreifen (7),
- zumindest einer zwischen Laufstreifen (7) und Karkasse (2) befindlichen Gürtellage (4a, 4b), die gummierte Festigkeitsträger (5) enthält, einem Randstreifen (6), der sich zumindest in einem axial äußeren Randbereich der Gürtellage (4a, 4b) erstreckt,
- und weiteren üblichen Bestandteilen wie Wulstkerne (3), Bandage, Seitenwände,
wobei die Gummierung der Festigkeitsträger (5) zumindest einer Gürtellage und/oder der Gummi zumindest eines Randstreifens (6) aus einer Gürtelkautschukmischung hergestellt ist, die als Kautschukkomponente Naturkautschuk und/oder synthetisches Polyisopren und/oder Polybutadien und/oder Styren-Butadien-Copolymer sowie weiterhin übliche Zusatzstoffe enthält, **dadurch gekennzeichnet, daß** der Anteil des Zusatzstoffes Alterungsschutzmittel in der Gürtelkautschukmischung bezogen auf 100 Gewichtsteile der gesamten Kautschukkomponenten zwischen 10 und 20 phr beträgt.

2. Fahrzeugluftreifen (1) nach Anspruch 1, **dadurch gekennzeichnet, daß** die Gürtelkautschukmischung zumindest ein verfärbendes Alterungsschutzmittel enthält.

3. Fahrzeugluftreifen (1) nach Anspruch 2, **dadurch gekennzeichnet, daß** die Gürtelkautschukmischung als Alterungsschutzmittel zumindest ein Phenylendiamin enthält.

4. Fahrzeugluftreifen (1) nach zumindest einem der vorhergehenden Ansprüche, **dadurch gekennzeichnet, daß** die Festigkeitsträger (5) zumindest einer Gürtellage (4a, 4b) aus Metall sind.

5. Fahrzeugluftreifen (1) nach zumindest einem der vorhergehenden Ansprüche, **dadurch gekennzeichnet, daß** sich zwischen zwei Gürtellagen (4a, 4b) zumindest an deren axialen Begrenzungen zumindest ein Randstreifen (6) aus Gummi befindet.

## Claims

1. Pneumatic vehicle tyre (1) having at least
- an air-impermeable inner layer,
- a rubber-coated carcase (2) containing strengtheners and extending from the crown region of the pneumatic vehicle tyre into the bead regions,
- a rubber tread strip (7) located radially on the outside,
- at least one belt ply (4a, 4b) located between tread strip (7) and carcase (2) and containing rubber-coated strengtheners (5),
- an edge strip (6) which extends at least in an axially outer edge region of the belt ply (4a, 4b),
- and further customary constituent parts such as bead cores (3), binding, side walls,
the rubber-coating of the strengtheners (5) of at least one belt ply and/or the rubber of at least one edge strip (6) being produced from a belt rubber mixture which contains natural rubber and/or synthetic polyisoprene and/or polybutadiene and/or styrene-butadiene-copolymer as the rubber components, as well as customary additives also, **characterised in that** the proportion of the anti-ageing additive in the belt rubber mixture relative to 100 parts by weight of the total rubber components is between 10 and 20 phr.

2. Pneumatic vehicle tyre (1) according to claim 1, **characterised in that** the belt rubber mixture contains at least one discolouring anti-ageing agent.

3. Pneumatic vehicle tyre (1) according to claim 2, **characterised in that** the belt rubber mixture contains at least one phenylenediamine as the anti-ageing agent.

4. Pneumatic vehicle tyre (1) according to at least one of the preceding claims, **characterised in that** the strengtheners (5) of at least one belt ply (4a, 4b) are formed from metal.

5. Pneumatic vehicle tyre (1) according to at least one of the preceding claims, **characterised in that** at least one rubber edge strip (6) is located between two belt plies (4a, 4b), at least at their axial boundaries.

## Revendications

1. Pneumatique de véhicule (1) comprenant au moins :
- une couche intérieure imperméable à l'air,
- une carcasse caoutchoutée (2) contenant des nappes de renfort, laquelle carcasse s'étend depuis la zone du sommet du pneumatique de véhicule jusqu'aux zones des talons,
- une bande de roulement en caoutchouc (7) se trouvant à l'extérieur dans le sens radial,
- une nappe d'armature (4a, 4b) se trouvant entre la bande de roulement (7) et la carcasse (2), laquelle nappe d'armature contient des nappes de renfort caoutchoutées (5),
- une bande de bordure (6) qui s'étend au moins dans une zone de bordure - extérieure dans le sens axial - de la nappe d'armature (4a, 4b), et
- d'autres éléments de structure habituels tels que des tringles (3), un bandage, des flancs,
le gommage des nappes de renfort (5) d'au moins une nappe d'armature et/ou le caoutchouc d'au moins une bande de bordure (6) étant fabriqués à partir d'un mélange de caoutchouc de ceinture qui contient, comme composant en caoutchouc, du caoutchouc naturel et/ou du polyisoprène synthétique et/ou du polybutadiène et/ou un copolymère à base de styrène et de butadiène, ainsi qu'en outre des additifs habituels,
**caractérisé**
**en ce que** la proportion de l'agent de protection contre le vieillissement servant d'additif est comprise, dans le mélange de caoutchouc de la ceinture, entre 10 phr et 20 phr par rapport à 100 parties en poids de la totalité des composants du caoutchouc.

2. Pneumatique de véhicule (1) selon la revendication 1, **caractérisé en ce que** le mélange de caoutchouc de la ceinture contient au moins un agent de protection contre le vieillissement, changeant de couleur.

3. Pneumatique de véhicule (1) selon la revendication 2, **caractérisé en ce que** le mélange de caoutchouc de la ceinture contient, comme agent de protection contre le vieillissement, au moins une phénylènediamine.

4. Pneumatique de véhicule (1) selon au moins l'une quelconque des revendications précédentes, **caractérisé en ce que** les nappes de renfort (5) d'au moins une nappe d'armature (4a, 4b) sont en métal.

5. Pneumatique de véhicule (1) selon au moins l'une quelconque des revendications précédentes, **caractérisé en ce qu'**au moins une bande de bordure (6) en caoutchouc se trouve entre deux nappes d'armature (4a, 4b), au moins au niveau de leurs délimitations axiales.
